## Europäisches Patentamt

## European Patent Office

## Office européen des brevets

(19)

(11) Veröffentlichungsnummer : **0 252 914 B1**

(12) **EUROPÄISCHE PATENTSCHRIFT**

(45) Veröffentlichungstag der Patentschrift :
28.06.89

(21) Anmeldenummer : 86902367.1

(22) Anmeldetag : 14.03.86

(86) Internationale Anmeldenummer :
PCT/EP 86/00142

(87) Internationale Veröffentlichungsnummer :
WO/8605632 (25.09.86 Gazette 86/21)

(51) Int. Cl.⁴ : **H 02 G 11/02, H 02 G 1/18**

(54) VORRICHTUNG ZUM VERSTAUEN EINES VERSORGUNGSKABELS VON VORZUGSWEISE EINER BORDNETZVERSORGUNGSANLAGE AUF FLUGHÄFEN.

(30) Priorität : 15.03.85 DE 8510300 U
31.07.85 DE G0852201

(43) Veröffentlichungstag der Anmeldung :
20.01.88 Patentblatt 88/03

(45) Bekanntmachung des Hinweises auf die Patenterteilung : 28.06.89 Patentblatt 89/26

(84) Benannte Vertragsstaaten :
AT BE CH DE FR GB IT LI LU NL SE

(56) Entgegenhaltungen :
EP--A-- 0 163 025
DE--A-- 2 029 198
DE--U-- 8 303 469
DE--U-- 8 416 520
DE--U-- 8 419 599
DE--U-- 8 522 019
FR--A-- 2 036 185
GB--A-- 682 407
US--A-- 2 141 909
US--A-- 2 942 794
US--A-- 4 384 688
Patents Abstracts of Japan, Band 7, Nr. 169 (M-231)(1314), 26. Juli 1983 & JP A 5874466 (Sumitomo Jukikai Kogyo K.K.) 4 Mai 1983

(73) Patentinhaber : Manfred Fladung GmbH
Heimbach 26
D-8752 Mömbris (DE)

(72) Erfinder : FLADUNG, Manfred
Heimbach 26
D-8752 Mömbris (DE)

(74) Vertreter : Stoffregen, Hans-Herbert, Dr. Dipl.-Phys. et al
Patentanwälte Strasse & Stoffregen Salzstrasse 11a
Postfach 2144
D-6450 Hanau/Main 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine Vorrichtung zum Verstauen von einem eine zentrale Bordnetzversorgungsanlage auf Flughäfen mit einem Versorgungssteckeranschluß eines Flugzeuges verbindbaren Versorgungskabel, das spiralförmig in einer Ebene zwischen zwei parallelen Trommelscheiben einer Kabelaufwickelvorrichtung aufwickelbar bzw. von dieser abwickelbar ist, wobei das Versorgungskabel über vorzugsweise einen Abschnitt mit einem Festanschluß wie Anschlußkasten verbunden ist.

Eine derartige Vorrichtung ist bereits bekannt (DE-U-83 03 469.2). Die Kabelaufwickelvorrichtung ist hierbei mit vertikaler Achse unter dem Brückenkopf eines Gates bzw. einer teleskopierbaren Fluggastbrücke aufgehängt und kann durch einen Motor in beiden Drehrichtungen angetrieben werden. Die bekannte Vorrichtung enthält eine Aufwickeltrommel und eine zu dieser koaxial angeordnete Ausgleichstrommel, die oberhalb der Aufwickeltrommel liegt. Eine solche Konstruktion ist aufwendig und erfordert ein langes Kabel, von dem nur ein Teil für den Anschluß an Flugzeuge ausgezogen werden kann.

Bekannt ist auch eine Kabelanschlußvorrichtung für eine zentrale Bordnetzversorgungsanlage mit nur einer Aufwickeltrommel, auf der in einer Ebene nebeneinander mehrere Lagen des Anschlußkabels aufwickelbar sind. In einem sich in Achsrichtung der Aufwickeltrommel erstreckenden Abschnitt sind bei dieser bekannten Kabelanschlußvorrichtung die Adern freiliegend angeordnet. Die Adern sind beim Abwickeln des Versorgungskabels von der Aufwickeltrommel unter Reduzierung der radialen Ausbauchung stärker und beim Aufwickeln unter Vergrößerung der radialen Ausbauchung schwächer spiralförmig verdreh- und verdrillbar (DE-U-84 16 520). Eine solche Konstruktion gewährt ein verdrillungsfreies Auf- und Abwickeln, ohne daß es unnötiger Ausgleichsabschnitte bedarf.

In der FR-A-2 036 185 ist eine Haspel zur Verlegung von dicken Kabeln bekannt. Es handelt sich dabei ausschießlich um eine Haspel zum Abwickeln relativ starrer Eckkabel und nicht um eine Vorrichtung zum Verstauen von auf- und abwickelbaren Kabeln. Mehrere gleichmäßig über die Umfangsfläche angeordnete parallel zur Achse der Haspel verlaufende als Rollen ausgebildete drehbare Zylinderelemente dienen dazu, die Richtung und die Lage des abgewickelten Kabels zu kontrollieren. Hierdurch wird sichergestellt, daß das Kabel beim Transport nicht von der Haspel rutschen kann.

Der Erfindung liegt zum einen die Aufgabe zugrunde, eine Vorrichtung der eingangs beschriebenen Art so weiterzuentwickeln, daß Versorgungskabel mit großen Querschnitten und großem Gewicht möglichst leichtgängig auf- und abgewickelt werden können.

Die Aufgabe wird erfindungsgemäß durch die im Anspruch 1 beschriebenen Maßnahmen gelöst.

Beim Auf- und Abwickeln führt die jeweils äußere Lage des Versorgungskabels auch radiale Bewegungen aus. Die äußere Lage berührt dabei mindestens teilweise die Führungselemente, die dafür sorgen, daß die äußere Lage ihre für das Auf- und Abwickeln günstige Form behält und daß zugleich nur geringe Reibungskräfte zu überwinden sind.

Vorzugsweise sind die Führungselemente achsparallel zu der Kabelaufwickelvorrichtung angeordnete, drehbar gelagerte Rollen. Zwischen dem Versorgungskabel und den Rollen findet bei der Berührung im wesentlichen eine rollende Reibung statt, so daß nur sehr geringe Reibungskräfte auftreten. Der Kraftaufwand für die Überwindung der Reibungskräfte ist daher minimal. Die Führung des Versorgungskabels durch die Rollen erleichtert das Auf- und Abwickeln beträchtlich. Die Rollen, z. B. 40 bis 50 Stück bei einem äußeren Umfang der Kabelaufwickelvorrichtung von 2,5 m, sind zweckmäßigerweise in gleichmäßigen Abständen längs des Umfangs angeordnet, wobei eine größere Lücke für den Ausgang des Versorgungskabels vorgesehen sein muß.

Es ist günstig, die Kabelaufwickelvorrichtung mit ihrer Drehachse horizontal anzuordnen. Bei schweren Kabeln mit größeren Querschnitten sind die oben beschriebenen Führungselemente praktisch die Voraussetzung dafür, daß das Versorgungskabel ohne Schwierigkeiten auf- und abgewickelt werden kann. Durch die Rollen wird also eine weitere Anordnungsmöglichkeit der Verstauvorrichtung geschaffen. Die Kabelaufwickelvorrichtung kann nicht nur mit ihrer Drehachse vertikal sondern in einem beliebigen, gegenüber der Vertikalen geneigten Winkel angeordnet werden.

Die Vorrichtung kann auch in einem Raum unterflur zu einer Rollbahn eines Flughafens angeordnet sein. Die Unterfluraufstellung mit horizontaler Drehachse hat bedeutende Vorteile. Die Ausmaße der Kabelaufwickelvorrichtung in den durch die Drehachse gelegten Ebenen sind kleiner als in den senkrecht durch die Drehachse verlaufenden Ebenen. Dies bedeutet, daß die Projektion der mit horizontaler Drehachse aufgestellten Kabelaufwickelvorrichtung auf die Ebene der Rollbahn kleiner als die Projektion einer mit vertikaler Drehachse aufgestellten Kabelaufwickelvorrichtung ist. Die Decke auf dem Raum, in dem sich die Kabelaufwickelvorrichtung unterflur befindet, kann bei horizontaler Drehachse daher geringere Ausmaße haben. Da die Decke für das Überrollen durch Flugzeuge ausgebildet sein muß, ergeben sich bei kleineren Deckenabmessungen beträchtliche Einsparungen, auch in bezug auf die Stärke der Decke.

Bei einer Unterfluranordnung ist als besonders hervorzuhebendes Merkmal zu erwähnen, daß das freie Ende des Versorgungskabels in einer Halterung festgelegt ist, die vorzugsweise mit einem anhebbaren eine Abdeckung oder einen Abschnitt dieser bildenden Element der Kabelaufwickelvorrichtung verbunden ist. Dabei kann die Halterung in Art einer Schublade ausgebildet sein, in die z. B. über ein Gestänge mit dem um eine Achse drehbaren als Deckel ausgebildeten Element verbunden ist. Beim Öffnen, also Verschwenken des Deckels in die geöffnete Stellung wird sodann die Schublade in einem Umfang angehoben, daß das freie Ende des Versorgungskabels, das z. B. Bedienungselemente zum Drehen der Kabelaufwickelvorrichtung aufweisen kann, in einem Umfang angehoben wird, daß es problemlos erfaßt werden kann.

Das verschwenkbare Element selbst kann innenseitig eine Sichtanzeige wie Blink- oder Dauerlicht aufweisen, das bei geöffnetem Deckel aktivierbar ist, um so anzuzeigen, daß die Abdeckung nicht befahren werden darf.

Nach einer weiteren Ausgestaltung der unterflurigen Anordnung ist die Möglichkeit gegeben, daß der die Kabelaufwickelvorrichtung aufnehmende Schacht eine Heizung aufweist, um sicherzustellen, daß das Versorgungskabel auch bei tiefen Temperaturen die erforderliche Flexibilität aufweist. Ferner kann im Bodenbereich des Schachtes ein Flüssigkeitsfühler vorgesehen sein, um anzuzeigen, ob sich Grundwasser angesammelt hat, um dann gegebenenfalls eine Flüssigkeitförderpumpe zu aktivieren.

Eine weitere Ausführungsform zeichnet sich dadurch aus, daß die Aufwickelvorrichtung drehbar auf einem Fahrwerk angeordnet ist, das auf dem Boden verfahrbar ist. Die Kabelaufwickelvorrichtung wie Aufwickeltrommel und die mit dieser verbundenen Teile, bei denen es sich um den Topf und beispielsweise um einen elektromotorischen Antrieb für die Aufwickeltrommel nebst Topf handelt, können daher beliebig und auch zusammen mit der Fluggastbrücke bewegt werden. Es ist möglich, die Vorrichtung mit der Aufwickeltrommel von Hand oder mittels eines Kraftfahrzeuges an einen gewünschten Aufstellungsort zu fahren.

Bei einer weiteren günstigen Ausführungsform der Erfindung sind auf der Kabelaufwickelvorrichtung in einer Ebene nebeneinander mehrere Lagen des Versorgungskabels aufwickelbar, wobei ein innen auf der Kabelaufwickelvorrichtung angeordnetes Ende des Versorgungskabels über Klemmen lösbar mit einem in die Drehachse der Kabelaufwickelvorrichtung umgelenkten Kabelstück verbunden ist, das in einem in Achsrichtung der Kabelaufwickelvorrichtung sich erstreckenden Abschnitt freiliegend spiralförmig angeordnet ist und das an seinem anderen Ende über Klemmen lösbar mit einem zur zentralen Bordnetzversorgungsanlage verlaufenden Versorgungskabelstück verbunden ist. Das Kabelstück kann hierbei bedarfsweise durch Lösen der Klemmen für sich ausgebaut werden. Die Ausbildung der Form des Kabelstücks, das sich beim Abwickeln des Versorgungskabels von der Kabelaufwickelvorrichtung unter Reduzierung einer radialen Ausdehnung stärker und beim Aufwickeln unter Vergrößerung der radialen Ausdehnung schwächer spiralförmig verdreht, kann für sich ohne Behinderung durch den übrigen, mehr oder weniger langen und schweren Teil des Versorgungskabels erfolgen. Das entsprechend vorgeformte Kabelstück läßt sich somit schneller und einfacher ein- und ausbauen als ein Kabelstück, das einen integralen Bestandteil des Versorgungskabels bildet.

Das Kabelstück hat bei dieser Vorrichtung einen in Richtung der Drehachse der Kabelaufwickelvorrichtung verlaufenden Abschnitt, in dem mehrere spiralförmige Windungen im Raum freiliegend angeordnet sind. Beim Auf- oder Abwickeln ändern sich die Abmessungen dieser Spirale. Es findet auch eine gewisse Verdrillung des Kabels beim Auf- und Abwickeln statt. Da das Kabelstück in diesem Abschnitt frei liegt, können die beim Auf- und Abwickeln auftretenden Beanspruchungen derart auf die Spirale einwirken, daß diese stetig verläuft. Die Beanspruchungen verteilen sich daher gleichmäßig in diesem Abschnitt des Kabelstücks. Es reichen beispielsweise drei bis vier Windungen einer Spirale aus, um etwa zwanzig Meter Ausziehlänge zu erreichen.

Das zylindrische Gehäuse ist zweckmäßigerweise an seinen Stirnseiten geschlossen und weist je einen zentrischen Durchlaß für das Kabelstück auf. An den Stirnseiten des Gehäuses ist das Kabelstück vorzugsweise in stopfbuchsenartigen Zugentlastungsvorrichtungen eingespannt. Außerhalb des Gehäuses befinden sich keine freiliegenden Adern.

Die nach außen gerichteten Seiten der Trommelscheiben sind von einer zylindrischen Abdeckung umgeben, die an Trägern befestigt ist und eine Unterbrechung an der Austrittsstelle des Versorgungskabels aufweist, das durch ein vor der Austrittsstelle liegendes Rollenmundstück geführt ist. Das Versorgungskabel liegt daher geschützt in der Aufwickeltrommel. Das Versorgungskabel wird immer an der gleichen Stelle von der Aufwickeltrommel abgezogen oder auf diese gewickelt. Das Rollenmundstück verhindert, daß das Versorgungskabel an den Rändern der Trommelscheiben scheuert.

Weitere Einzelheiten, Merkmale und Vorteile der Erfindung ergeben sich nicht nur aus den Ansprüchen, den diesen zu entnehmenden Merkmalen — für sich oder zumindest teilweise in Kombination — sondern auch aus der folgenden Beschreibung von zeichnerisch dargestellten Ausführungsbeispielen.

Es zeigen :

Fig. 1 eine Seitenansicht des Kopfs einer teleskopierbaren Fluggastbrücke mit einer Vorrichtung zum Verstauen des Versorgungskabels einer zentralen Bordnetzversorgungsanlage,

Fig. 2 einen Längsschnitt durch die in Fig. 1 dargestellte Vorrichtung zum Verstauen des Versorgungskabels einer zentralen Bordnetzversorgungsanlage,

Fig. 3 einen Längsschnitt durch eine andere Ausführungsform einer Vorrichtung zum Verstauen des Versorgungskabels einer zentralen Bordnetzversorgungsanlage,

Fig. 4 einen Schnitt längs der Linien I-I der in Fig. 3 dargestellten Vorrichtung ohne auseinandergespreizte Adern des Versorgungskabels,

Fig. 5 einen Längsschnitt durch einen Randabschnitt einer Kabelaufwickelvorrichtung,

Fig. 6 einen Längsschnitt durch eine dritte Ausführungsform einer Vorrichtung zum Verstauen des Versorgungskabels,

Fig. 7 die in Fig. 6 dargestellte Vorrichtung von vorne,

Fig. 8 und 9 Darstellungen von besonders hervorzuhebenden unterflur angeordneten Kabelaufwickelvorrichtungen,

Fig. 10 eine verfahrbare Vorrichtung zum Verstauen des Anschlußkabels einer zentralen Bordnetzversorgungsanlage in Seitenansicht,

Fig. 11 einen Schnitt durch die Vorrichtung gemäß Fig. 9 und

Fig. 12 die in Fig. 9 dargestellte Vorrichtung von unten.

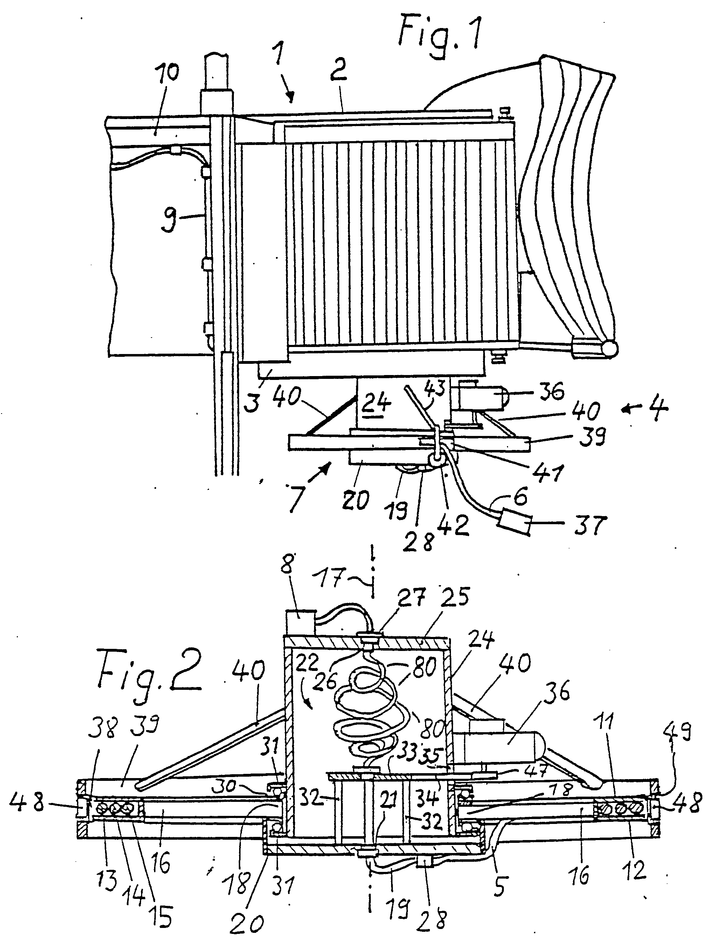

Eine teleskopierbare Fluggastbrücke 1 von der in Fig. 1 nur der vordere Teil dargestellt ist, enthält einen Kopf 2, an dessen Unterseite 3 eine Vorrichtung 4 zum Verstauen eines Versorgungskabels 5 einer zentralen Bordnetzversorgungsanlage für Flugzeuge befestigt ist. Die Vorrichtung 4 wird mit der Fluggastbrücke 1 horizontal und vertikal bewegt und eingestellt. Das Versorgungskabel 5 enthält einen Aufwickelabschnitt 6.

Wenn das Versorgungskabel 5 verstaut ist, befindet sich der Aufwickelabschnitt 6 auf einer trommelförmigen Kabelaufwickelvorrichtung 7. Um ein Flugzeug über das Versorgungskabel 5 mit Energie zu versorgen, wird, je nach der Lage der Einspeisestelle am Flugzeug, ein mehr oder weniger langes Stück des Aufwickelabschnitts 6 von der Aufwickelvorrichtung 7 abgezogen. Das Versorgungskabel 5 verläuft bis zu einem am Kopf 2 befestigten Verteiler- bzw. Anschlußkasten 8.

Vom Anschlußkasten 8 ist ein Verbindungskabelstück 9 längs der teleskopierbaren Fluggastbrücke 1 verlegt. Das Verbindungskabelstück 9 ist an nicht näher bezeichneten Haltern aufgehängt, die in einer Schiene 10 längsverschiebbar gelagert sind, um die Länge des Versorgungskabels 5 der ausgezogenen Länge der Fluggastbrücke 1 anpassen zu können.

Die Kabelaufwickelvorrichtung 7 enthält zwei seitliche, zueinander parallele Trommelscheiben 11, 12, zwischen denen das Versorgungskabel 5 in aufgewickeltem Zustand liegt. Der Abstand zwischen den beiden Trommelscheiben 11, 12 ist so auf den Durchmesser des Versorgungskabels 5 abgestimmt, daß sich die aufgewickelten Lagen 13, 14, 15 in einer Ebene nebeneinander befinden. Die beiden Trommelscheiben 11, 12 sind an ihren, der Drehachse zugewandten Rändern durch einen nicht näher bezeichneten Ring miteinander und mit Speichen 16 verbunden. Von dem innen auf der Kabelaufwickelvorrichtung 7 liegenden Ende des Aufwickelabschnitts 6 verläuft das Versorgungskabel 5 radial in Richtung der in Fig. 2 strichpunktiert dargestellten Drehachse der Kabelaufwickelvorrichtung 7. Ein Stück vor den inneren Enden 18 der Speichen 16 beginnt ein Bogen 19 des Versorgungskabel 5. Mit dem Bogen 19 ist das Versorgungskabel 5 in die Drehachse 17 der Kabelaufwickelvorrichtung 7 umgelenkt. Die Speichen 16 sind nahe an den inneren Enden 18 mit dem Rand eines nach unten ragenden zylindrischen Topfs 20 verbunden, der eine zentrische Öffnung 21 für den Durchlaß des Versorgungskabels 5 aufweist. Der Topf 20 ist starr an den Speichen 16 befestigt und mit diesen um die Achse 17 drehbar.

Das Versorgungskabel 5 enthält einen Abschnitt 22, der sich in axialer Richtung der Kabelaufwickelvorrichtung erstreckt. Der Abschnitt 22 weist eine frei im Raum angeordnete Kabelspirale auf, die an ihren Enden jeweils in einer Öffnung der Kabelaufwickelvorrichtung 7 gehalten ist. Die Kabelspirale des Abschnitts 22 besteht aus mehreren, z. B. drei bis vier Windungen 80, die im Raum zwischen den als Führungs- und Halteelemente vorgesehenen Öffnungen freiliegend angeordnet sind. In Fig. 2 ist eine der Öffnungen mit 26 bezeichnet, während die andere Öffnung nicht näher bezeichnet ist. Die Öffnungen sind in Richtung der Drehachse 17 angeordnet. Der Abschnitt 22 verläuft längs der Drehachse 17 der Kabelaufwickelvorrichtung 7 und befindet sich in einem zylindrischen Gehäuse 24, auf dessen Außenseite die Kabelaufwickelvorrichtung 7 drehbar gelagert ist. Das Gehäuse 24 ist an seiner oberen Stirnseite mit einer Abdeckung 25 versehen, die eine zentrische Öffnung 26 für den Durchlaß des Versorgungskabels 5 enthält. In die Öffnung 26 ist eine Kabelverschraubung 27 eingesetzt, mit der das Versorgungskabel 5 gehalten wird, das in Höhe der Öffnung 26 wieder von dem nicht näher bezeichneten, äußeren Kabelmantel umgeben ist.

Der Bogen 19 des Versorgungskabels 5 ist in einer außen am Boden des Topfs 20 angebrachten Halterung 28 geführt. Die Halterung 28 ist außermittig, d. h. in einem gewissen Abstand von der Öffnung 21 angeordnet.

Innerhalb des nicht näher bezeichneten Kabelmantels verlaufen die Adern des Versorgungskabels 5 ebenfalls spiralförmig. Wenn sich der Aufwickelabschnitt 6 auf der Kabelaufwickelvorrichtung 7 befindet, ist die radiale Ausdehnung der Windungen 80 der Kabelspirale am größten. Die Kabelspirale ist dann am wenigsten verdreht. Es ist möglich, daß sich beim Aufwickeln die Anzahl der Windungen 80 verkleinert.

Wenn der Aufwickelabschnitt 6 von der Kabelaufwickelvorrichtung 7 abgezogen ist, sind die Windungen 80 wieder stärker miteinander verdreht. Die radiale Ausdehnung ist am kleinsten. Je nach dem Grad der Verdrehung können wieder mehr Windungen vorhanden sein. Die Länge des Abschnitts 22, die radiale Ausdehnung und die Anzahl der Windungen 80 sind auf die auf- bzw. abzuwickelnden Lagen 13, 14, 15 und deren Durchmesser abgestimmt. Mit der Kabelspirale läßt sich bei drei Lagen 13, 14, 15 ohne weiteres eine Abwickellänge von mindestens 18 m Kabel erreichen. Durch mehr Lagen kann unter entsprechender Anpassung der Kabelspirale eine noch größere Abwickellänge erreicht werden. Die Länge des Abschnitts 22 beträgt dabei ungefähr

0,5 m.

Bei einer anderen Ausführungsform liegen die Adern 23 des Versorgungskabels 5 in dem Abschnitt 22 frei. Die Adern 23 können jeweils aus verschiedenen Leitern bestehen, die von einer gemeinsamen Isolierhülle umgeben sind. Bei den Adern 23 handelt es sich um Leitungen, die den einzelnen Phasen eines 400-Hz-Drehstroms zugeordnet sind, und um Steuerleitungen. Beispielsweise sind im Versorgungskabel 5 sieben Adern für Starkstrom un mindestens sechs Adern für Steuerleitungen vorgesehen. Mit dem äußeren Mantel, der beim Abschnitt 22 entfernt ist, hat das Versorgungskabel 5 einen Durchmesser von etwa 46 mm. In den Adern für Steuerleitungen können sich zahlreiche einzelne Steuerleitungen befinden.

Die Adern 23 verlaufen innerhalb des nicht näher bezeichneten Kabelmantels des Versorgungskabels 5 spiralförmig. Im Abschnitt 22 ist der spiralförmige Verlauf gegenüber der Lage innerhalb des Kabelmantels schwächer. Wenn sich der Aufwickelabschnitt 6 auf der Kabelaufwickelvorrichtung 7 befindet, ist der spiralförmige Verlauf der Adern 23 am schwächsten. Die Adern 23 sind am wenigsten miteinander verdrillt und weisen deshalb in radialer Richtung der Kabelaufwickelvorrichtung 7 sich erstreckende Ausbauchungen 29 auf. Wenn der Aufwickelabschnitt 6 von der Kabelaufwickelvorrichtung 7 abgezogen ist, sind die Adern 23 wieder stärker miteinander verdrillt, so daß die radiale Erstreckung der Ausbauchungen 29 geringer ist. Die Länge des Abschnitts 22 mit den freiliegenden Adern 23 ist auf die Anzahl der auf- bzw. abzuwickelnden Lagen 13, 14 15 und deren Durchmesser abgestimmt. Bei vollständig abgezogenem Aufwickelabschnitt 6 darf die Verdrillung der Adern 23 nicht stärker sein als die in einem Versorgungskabel 5 mit geschlossenem Außenmantel vorhandene Verdrillung. Vorzugsweise ist die Länge des Abschnitts 22 so gewählt, daß die Verdrillung bei vollständig abgezogenem Aufwickelabschnitt 6 etwas geringer ist als die Verdrillung der Adern 23 innerhalb des geschlossenen äußeren Kabelmantels. Wenn der Durchmesser der aufgewickelten Lagen 13, 14, 15 größer gewählt wird, ergibt sich daher eine kleinere Länge des Abschnitts 22. Im allgemeinen reicht ein Aufwickelabschnitt 6 von 18 m Länge aus. Bei einem Durchmesser der mittleren Lage 14 von etwa 1,6 bis 2,4 m reichen die drei Lagen 13, 14, 15 völlig aus, um nach dem Abwickeln 18 m Kabel zur Verfügung zu stellen. Die Länge des Abschnitts 22 übersteigt dabei nur etwa 0,6 bis 0,4 m.

Es läßt sich daher eine Vorrichtung 4 mit kompakten Abmessungen und relativ geringem Gewicht herstellen. Besonders vorteilhaft ist, daß die Länge des Aufwickelabschnitts 6 sehr viel größer als die Länge des Abschnitts 22 einschließlich des Bogens 19 ist. Das Versorgungskabel 5 wird daher besser ausgenutzt. Es wird nicht mehr ein so großer Kabelanteil benötigt, der nach dem vollen Abwickeln noch auf der Kabeltrommel verbleibt. Neben der Einsparung an dem relativ aufwendigen Kabel ergeben sich daher noch weitere Vorteile durch die Gewichtseinsparung, d. h. die Kabeltrommel wird nicht mehr von so großen Gewichten belastet. Dies bedeutet, daß die Vorrichtung 4 konstruktiv einfacher und leichter ausgebildet sein kann.

Die Kabelaufwickelvorrichtung 7 ist an den inneren Rändern 18 der Speichen 16 je mit Führungsbahnen 30 versehen, denen Flansche 31 gegenüberstehen, die von der Außenseite des Gehäuses 24 der Kabelaufwickelvorrichtung 7 vorspringen. Die Führungsbahnen 30 und die Flansche 31 bilden mit nicht näher dargestellten Kugeln oder Tonnen Axialwälzlager. Diese Anordnung ist für die vertikale Ausrichtung der Drehachse 17 geeignet. Die Trommelscheiben 11, 12 erstrecken sich dabei in horizontaler Richtung.

Auf der Innenseite des Bodens des Topfs 20 sind Stäbe 32 befestigt, die konzentrisch und parallel zu der Drehachse 17 verlaufen. Die Stäbe 32 erstrecken sich über ein Stück der Länge des Abschnitts 22. Auf den dem Boden des Topfs 20 abgewandten Enden der Stäbe 32 ist ein Antriebsrad 33 befestigt, das konzentrisch zur Drehachse 17 verläuft. Das Antriebsrad 33 hat einen Durchlaß, der auf die Ausbauchung 29 abgestimmt sein kann. Der Durchlaß, der nicht näher bezeichnet ist, weist zweckmäßigerweise an seinen Wänden eine Verkleidung aus einem elektrisch isolierenden Stoff auf, gegen die sich die Adern 23 legen können.

Das Antriebsrad 33 ist vorzugsweise als Zahnrad ausgebildet, auf das eine Kette 34 aufgezogen ist, die durch eine Öffnung 35 im Gehäuse 24 verläuft. Außen am Gehäuse 24 ist eine Antriebseinheit 36 befestigt, die einen nicht näher bezeichneten Getriebemotor enthält, dessen Ausgangswelle ein Ritzel 47 trägt um das die Kette 34 gelegt ist. Der Getriebemotor läßt sich auf zwei einander entgegengesetzte Drehrichtungen umschalten.

Über den Getriebemotor und die Kette 34 wird bedarfsweise ein Drehmoment auf die Kabelaufwickelvorrichtung 7 ausgeübt, wenn das Versorgungskabel 5 auf- oder abgewickelt wird. Das Ein- und Ausschalten des Getriebemotors erfolgt über einen nicht näher dargestellten Schalter, der sich an einer Steckeinheit 37 befindet, die am Ende des Versorgungskabels 5 befestigt ist. Das Versorgungskabel 5 wird bei eingeschaltetem Getriebemotor mit der von der Drehzahl der Kabelaufwickelvorrichtung 7 und von den Durchmessern der Lagen 13, 14, 15 bestimmten Geschwindigkeit auf- oder abgewickelt. Für das Auf- und Abwickeln reicht eine Person aus.

Die Kabelaufwickelvorrichtung 7 weist zwischen den Trommelscheiben 11, 12 eine nach außen gerichtete Öffnung 38 auf, der eine zylindrische Abdeckung 39 gegenübersteht, die die Form eines Ringes hat.

Zwischen den äußeren Rändern der Trommelscheiben 11, 12 und der Abdeckung 39 befindet sich nur ein kleiner Spalt. Die Abdeckung 39 ist mit Trägern 40 am Gehäuse 24 befestigt. Durch die Abdeckung 39 wird das Versorgungskabel 5 geschützt. Die Abdeckung 39 weist eine Unterbrechung 41 auf. An der Stelle der Unterbrechung 41 tritt das Versorgungskabel 5 aus der Kabelaufwickelvorrichtung 7 in etwa tangential aus.

Nahe der Unterbrechung 41 ist eine Auflagerolle 42 vorgesehen, auf der das Versorgungskabel 5 geführt ist. Die Auflagerolle 42, die eine konkave Oberfläche haben kann, um das Versorgungskabel 5 zu führen, befindet sich mit ihrer Oberseite in Höhe der Trommelscheibe 12. Das Versorgungskabel 5 wird daher immer an der gleichen Stelle auf- und abgewickelt. Die Auflagerolle 42 verhindert, daß der Mantel des Versorgungskabels 5 an den Kanten der Trommelscheiben 11, 12 scheuert. Außerdem wird durch die Auflagerolle 42 eine zusätzliche Gewichtsentlastung geschaffen. Die Auflagerolle 42 ist in einem Träger 43 drehbar gelagert, der am Gehäuse 24 befestigt ist. Bei dem Träger 43 kann es sich auch um ein Gestänge handeln. An Stelle einer Auflagerolle kann vorzugsweise ein Rollenmundstück vorgesehen sein.

Um zu verhindern, daß in den Trommelscheiben 11, 12 bei höheren Frequenzen des Stroms im Versorgungskabel 5 störende Wirbelströme auftreten, sind die Trommelscheiben 11, 12 aus Aluminium und aus einzelnen Abschnitten 44 ausgebaut, deren einander zugewandte Enden 45 abgewinkelt sind.

Zwischen den Enden 45 befinden sich Lagen 46 aus Isolierstoff. Die Enden 45 sind miteinander durch nicht näher dargestellte Schrauben verbunden, die in isolierenden Hülsen geführt sind, um Kurzschlüsse zwischen benachbarten Abschnitten 44 auszuschalten.

Beim Abwickeln des Versorgungskabels 5, insbesondere bei größeren Abwickelgeschwindigkeiten, dehnt sich das Versorgungskabel 5 radial aus. Um eine gute Führung des Versorgungskabels 5 und geringe Kräfte für das Auf- und Abwickeln zu erreichen, sind längs des Umfangs der Kabelaufwickelvorrichtung nahe an der Öffnung 38 in gleichmäßigem Abstand als Führungselemente Rollen 48 vorgesehen, die achsparallel zur Drehachse 17 drehbar gelagert sind. Die Rollen 48 sind z. B. in Ausnehmungen 49 der Abdeckung 39 angeordnet. Die Rollen 48 ragen in Richtung der Öffnung 38 über die Innenseite der Abdeckung 39 hinaus. Längs des äußeren Umfangs von ungefähr 2,5 m ist es günstig etwa 40 bis 50 Rollen 48 vorzusehen.

Wegen der Rollen 48 sind die für die Überwindung der rollenden Reibung notwendigen Kräfte beim Auf- und Abwickeln des Versorgungskabels 5 aufzubringen. Diese Reibungskräfte sind sehr gering. Die Führung durch die Rollen 48 erleichtert das Auf- und Abwickeln des Versorgungskabels in erheblichem Maße.

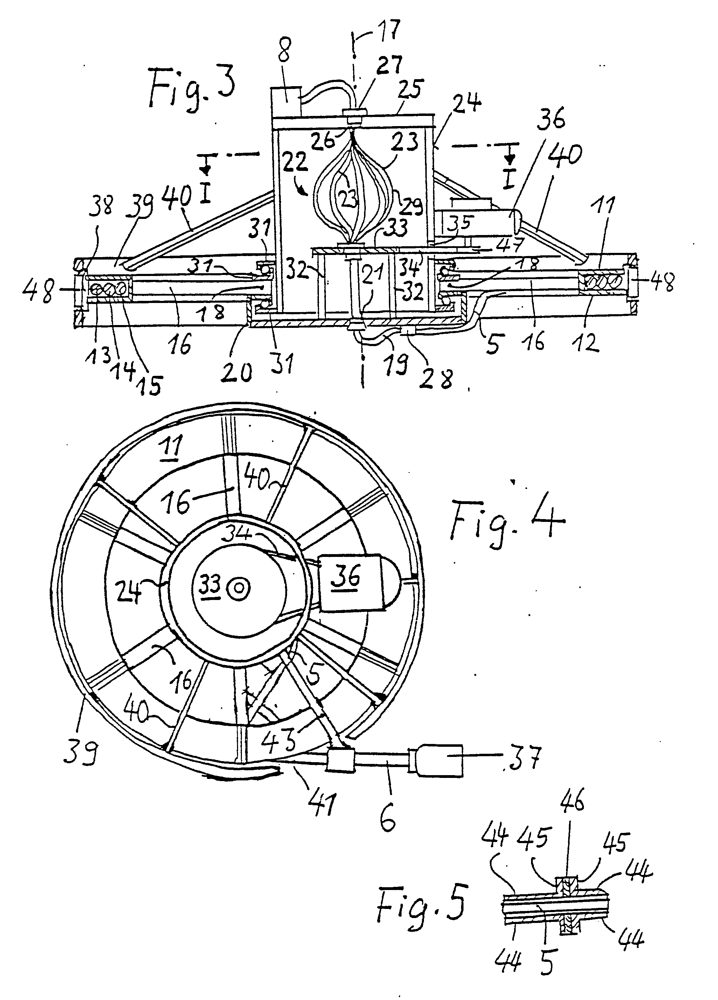

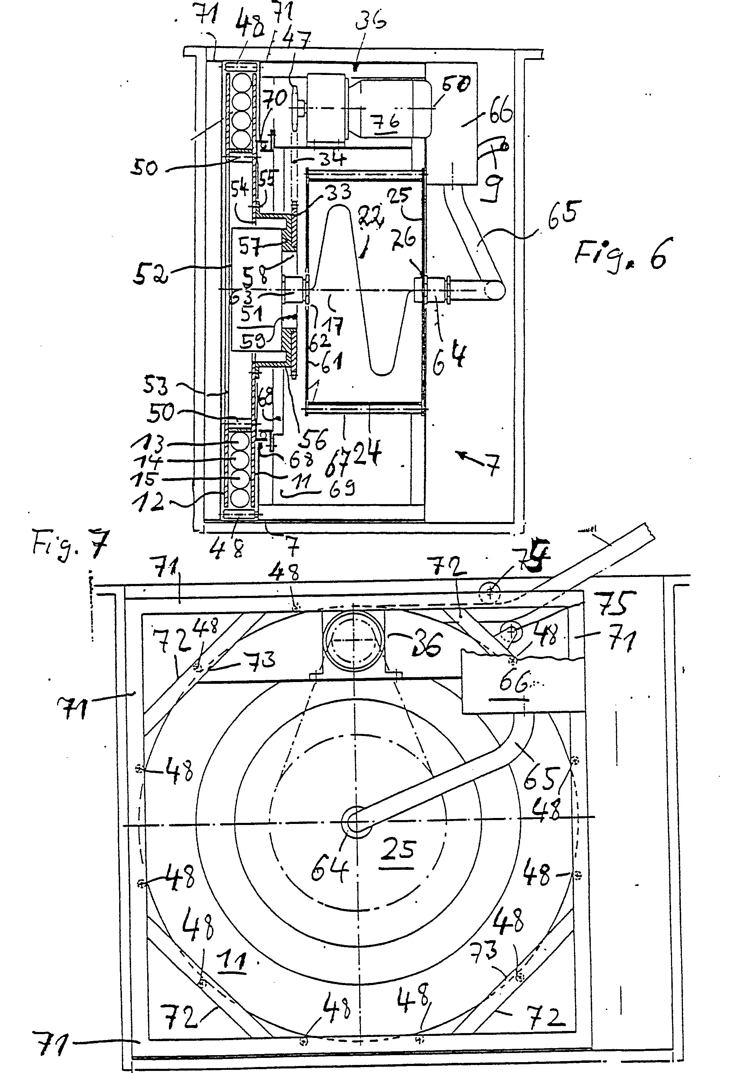

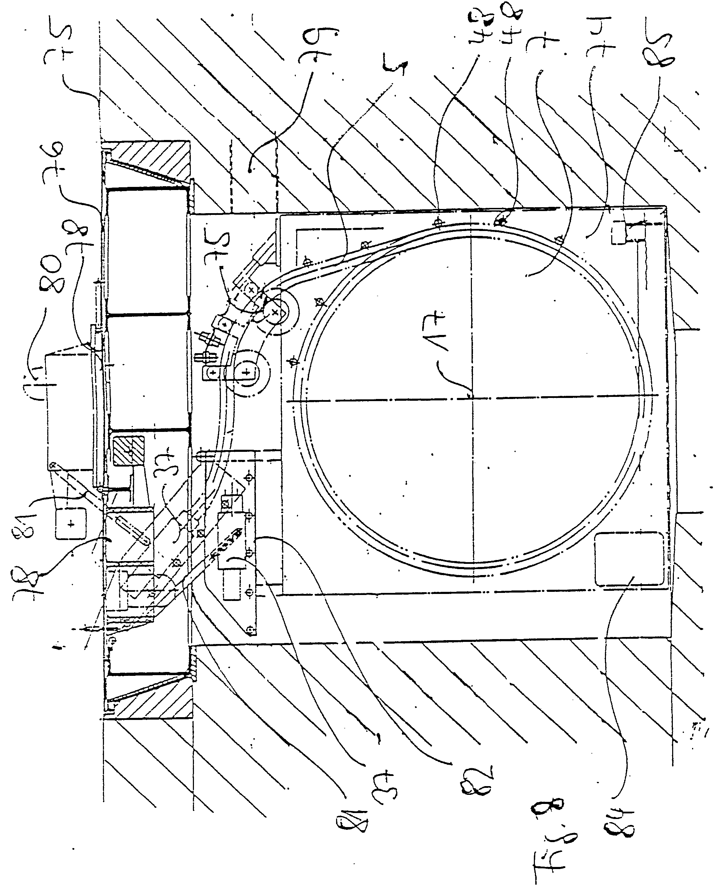

Bei der in den Fig. 6-8 dargestellten Ausführungsform einer Kabelaufwickelvorrichtung 7 ist die Drehachse 17 horizontal angeordnet. Mit den Vorrichtungen gemäß den Fig. 1 bis 5 übereinstimmende Elemente sind in Fig. 6, 7 und 8 mit den gleichen Bezugszeichen versehen. Die Kabelaufwickelvorrichtung 7 gemäß Fig. 7 enthält die beiden Trommelscheiben 11, 12, die aufgrund der horizontalen Drehachse 17 vertikal verlaufen. Die Trommelscheiben 11, 12 sind durch Abstandsbolzen 50 voneinander getrennt, die sich nahe am inneren Ende des Aufnahmeraums der Kabelaufwickelvorrichtung 7 für das Versorgungskabel 5 befinden. In dem nicht näher bezeichneten Aufnahmeraum befinden sich z. B. die aufgewickelten Lagen 13, 14, 15 und eine weitere nicht näher bezeichnete Lage des Versorgungskabels 5. Diese Lagen befinden sich in einer Ebene nebeneinander.

Die innere Lage des Versorgungskabels 5 ist mit ihrem radial nach innen zu einem Anschlußkasten 51 geführten Ende, das nicht näher dargestellt ist, im Anschlußkasten 51 an Klemmen angeschlossen. Der Anschlußkasten 51 verläuft zwischen den beiden Trommelscheiben 11, 12 in axialer Richtung der Kabelaufwickelvorrichtung 7. Die eine Stirnseite 52 des Anschlußkastens 51 befindet sich in etwa in der Ebene der Trommelscheibe 12. Diese Stirnseite 52 enthält einen abnehmbaren Deckel. Die Trommelscheibe 12 hat eine zentrische Ausnehmung 53, so daß der Deckel zum Einbauen oder Lösen leicht zugänglich ist. Die innere Trommelscheibe 11, die ebenfalls eine zentrische Ausnehmung 54 aufweist, ist an den Rändern dieser Ausnehmung mit einem Flansch 55 an einem rotationssymmetrischen Tragkörper 56 befestigt, der an einem Ende einen Ring 57 aufweist, an dem der Anschlußkasten 51 befestigt ist. Der Ring 57 hat einen zur Drehachse 17 rotationssymmetrischen Absatz 58, mit dem das Antriebsrad 33 verbunden ist, das einen zentrischen Durchlaß 59 aufweist. Das als Zahnrad ausgebildete Antriebsrad 33 ist über die Kette 34 mit dem Ritzel 47 der Antriebseinheit 36 verbunden. Die Drehachse 60 des Ritzels 47 verläuft parallel zur Drehachse 17, längs der sich das neben dem Antriebsrad 33 beginnende zylindrische Gehäuse 24 erstreckt. Das Gehäuse 24 hat an seiner einen Stirnseite die mit dem Durchlaß 26 versehene Abdeckung 25. An der anderen Stirnseite ist das Gehäuse 24 mit einer weiteren Abdeckung 61 versehen, die eine zentrische Ausnehmung 62 enthält.

Der Anschlußkasten 51 weist ein längs der Drehachse 17 verlaufendes stopfbuchsenartiges Kabeleinspannelement 63 auf. Ein stopfbuchsenartiges Kabeleinspannelement 64 ist noch in dem Durchlaß 26 befestigt. Zwischen den Kabeleinspannelementen 63, 64 ist ein Kabelstück 65 mit dem Abschnitt 22 befestigt, der in Fig. 6 nur schematisch dargestellt ist.

Der Abschnitt 22 ist oben bereits ausführlich beschrieben.

Das Kabelstück 65 ist mit einem Ende im Anschlußkasten 51 lösbar an das Ende der inneren Lage des Versorgungskabels 5 angeschlossen. Mit dem anderen Ende ist das Kabelstück 65 in einen Steuer- und Anschlußkasten 66 eingeführt und lösbar an Klemmen angeschlossen, die sich im Steuer- und Anschlußkasten 66 befinden und nicht näher dargestellt sind. Zum Steuer- und Anschlußkasten 66 ist das Verbindungskabelstück 9 verlegt. Da das Kabelstück 65 als gesonderte, relativ kurze Einheit ausgebildet ist, läßt sich der Abschnitt 22 beispielsweise bei befestigten Kabeleinspannelementen vorformen und danach in das Gehäuse 24 einbauen. Anschließend werden die Enden des Kabelstückes 65 im Anschlußkasten 51 und im Steuer- und Anschlußkasten 66 mit den entsprechend vorgesehenen Klemmen verbunden. Das Kabelstück 65 kann hierdurch relativ leicht ein- und ausgebaut werden. Als gesondertes Teil kann es im Falle einer Störung schnell ersetzt werden. Das Gehäuse 24 hat im Inneren eine elektrisch isolierende Auskleidung. Es kann zweckmäßigerweise einen Kunststoffzylinder enthalten, an dessen Außenseite in gleichmäßigen Abständen Stehbolzen 67 die Abdeckungen 25 und 61 miteinander verbinden. An der Trommelscheibe 11 ist ein Drehkranz 68 befestigt, dem ein nicht näher bezeichnetes Gegenstück gegenübersteht, das mit einem Träger 69 verbunden ist. Ein Walzträger 70 befindet sich zwischen dem Drehkranz und seinem Gegenstück.

Nahe an den äußeren Stirnseiten der Trommelscheiben 11, 12 befinden sich die in gleichmäßigen Abständen angeordneten Rollen 48. Die Aufwickelvorrichtung 7 enthält einen Rahmen aus vier Profilstäben 71, die ein Quadrat oder Rechteck bilden. Zwischen den Profilstäben 71 sind nahe an deren Ecken weitere Profilstäbe 72 schräg angeordnet. In den Profilstäben 71, 72 sind die Rollen 48 drehbar gelagert. Die Profilstäbe 71, 72 liegen mit nicht näher bezeichneten ebenen Abschnitten 73 in kurzem Abstand derart neben den Rändern der Trommelscheiben 11, 12, daß sich die Abschnitte 73 mit den Rändern der Trommelscheiben 11, 12 überdecken. Dabei sind die Überdeckungsstellen so gewählt, daß sich elf Rollen 48 anordnen lassen. Die Abstände zwischen den Rollen 48 entsprechen den für zwölf Rollen vorgehenen gleich großen Abständen. Die Rollenachsen befinden sich an den Ecken eines Achtecks. An einer Stelle des Achtecks ist jedoch keine Rolle vorhanden, da hier das Versorgungskabel 5 über ein mehrere Rollen 75 aufweisendes Rollenmundstück aus der Kabelaufwickelvorrichtung 7 herausgeführt ist. Zweckmäßigerweise ist der Getriebemotor 76 der Antriebseinheit in explosionsgeschützter Ausführungsform ausgeführt. Ebenso ist es günstig, den Anschlußkasten 51 sowie den Steuer- und Anschlußkasten 66 in explosionsgeschützter Ausführungsform auszubilden. Damit läßt sich eine hohe Sicherheit beim flugzeugnahen Einsatz der Kabelaufwickelvorrichtung 7 erreichen.

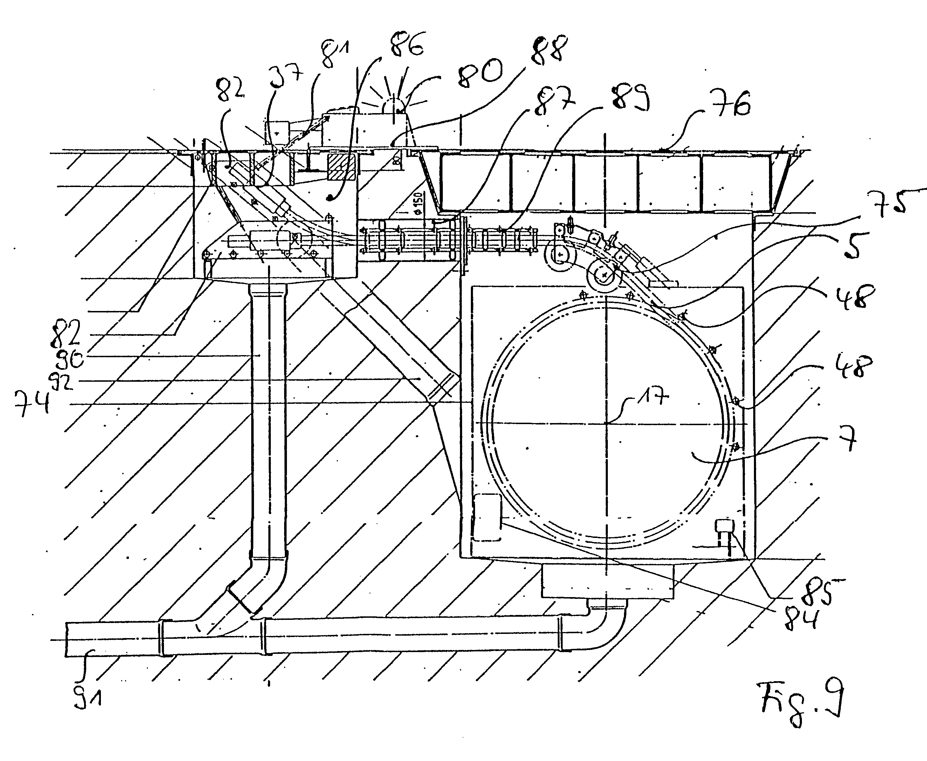

Besonders hervorzuhebende Ausführungsformen von unterflur angeordneten Kabelaufwickelvorrichtungen 7 sind den Fig. 8 und 9 zu entnehmen. Dabei sind die Kabelaufwickelvorrichtungen 7 in einem Schacht 74 unterhalb der Rollbahn 75 eines Flugplatzes angeordnet.

In der Fig. 8 ist der Schacht 74 mit einer Abdeckung 76 verschlossen, die einen Deckel 78 aufweist, durch die eine Öffnung 77 verschließbar ist. Der Deckel 78 ist in ausgezogener Darstellung in geschlossener Position und in Punkt-Strich-Darstellung in geöffneter Stellung eingezeichnet. Der Deckel 78 weist deckelinnenseitig eine Sichtanzeige vorzugsweise in Form eines Dauerlichtes 80 auf, um anzuzeigen, wann die Öffnung 77 der Abdeckung 76 geöffnet ist oder nicht.

Der Deckel 78 ist über Verbindungselemente wie z. B. einem Gestänge 81 mit einer Halterung in Form einer Schublade 82 verbunden, in dem das freie Ende des Versorgungskabels 5 festgelegt ist. Dabei weist das freie Ende des Versorgungskabels 5 eine Steckeinheit 37 auf, die nicht dargestellte Bedienungselemente umfaßt, über die z. B. die Kabelaufwickelvorrichtung 7 in Drehbewegung versetzbar ist, um also das Kabel 5 ab- bzw. aufzurollen.

Dadurch, daß beim Öffnen des Deckels 78 die Halterung 82 mit angehoben wird, wird das freie Ende des Kabels 5 mit der Steckeinheit 37 an die Oberfläche 75 gezogen, so daß ein problemloses Erfassen möglich ist, ohne daß ein Hantieren in dem Schacht 74 selbst erforderlich ist. Dabei kann gegebenenfalls die Schublade 82 über das Gestänge 78 nur in einem Umfang angehoben werden, daß eine vollständige Aufnahme innerhalb der Abdeckung 76 noch erfolgt, so daß ein Beschädigen durch aus der Oberfläche 75 vorstehende Teile ausgeschlossen ist. Selbstverständlich ist auch weiteres Anheben möglich.

In Fig. 9 ist die Halterung 82 in einem neben dem Schacht 74 gesonderten Raum 86 unterflurig angeordnet, wobei der Schacht 74 mit dem Raum 86, der auch als kleiner Schacht zu bezeichnen ist, über z. B. ein Rohr 87 verbunden ist, durch das das Versorgungskabel 5 zu der Halterung 82 geführt ist. Innerhalb des Rohres 87 ist das Kabel 5 von einer Kabelführung 89 umgeben. Der Raum 86 ist durch eine anhebbare Abdeckung, also einen Deckel 88 verschließbar. Dabei kann der Deckel 88 entsprechend dem Deckel 78 ausgebildet sein. Insbesondere ist der Deckel 88 mit der Halterung 82 verbunden, um beim Öffnen des Deckels 88 ein Anheben der Halterung 82 mit dem Ende 37 des Versorgungskabels 5 zu bewirken.

Der Vorteil einer Trennung zwischen dem die Kabeltrommel 7 aufnehmenden Schacht 74 und dem das Kabelende 37 aufnehmenden Raum 86 ist darin zu sehen, daß z. B. bei Regen der Deckel 88 geöffnet werden kann, ohne daß die Gefahr besteht, daß in den Schacht 74 Wasser eindringen kann. Auch ein unbeabsichtigtes Hereinfallen von Gegenständen in den Raum 86 kann zu keiner großen Beschädigung führen, anders als im Falle, daß der Schacht 74 frei zugänglich wäre.

Über einen Kanal 79 (Fig. 8) wird das nicht dargestellte Verbindungskabelstück 9 in den Schacht 74 geführt, um -wie zuvor beschrieben- mit dem Kabel 5 der Aufwickelvorrichtung 7 verbunden zu werden.

Ferner erkennt man, daß die Außenumfangsfläche der äußersten Kabelwicklung von um eine horizontal verlaufende Achse drehbaren Rollen 48 abgestützt ist, um so ein reibungsarmes Auf- bzw. Abwickeln zu gewährleisten. Ferner ist in den Fig. 8 und 9 das die Rollen 75 aufweisende Rollenmundstück zu entnehmen, über die das Kabel 5 zu der Halterung 82 in Form der Auflageschublade geführt wird.

Schließlich ist noch darauf hinzuweisen, daß sich innerhalb des Schachts 74 eine Heizung 84 befindet, um die Temperatur auf einen Wert einstellen zu können, bei dem das Kabel 5 noch die erforderliche Flexibilität aufweist. Ferner kann im Bodenbereich des Schachts 84 ein Flüssigkeitsfühler 85 vorgesehen sein, um gegebenenfalls eindringendes und nicht abfließendes oder nicht hinreichend abfließendes Grundwasser anzuzeigen. In Abhängigkeit von dem Füllstand kann sodann eine nicht dargestellte Flüssigkeitsförderpumpe aktiviert werden, um eingedrungenes Wasser abzupumpen.

Um sich ansammelnde Flüssigkeit aus dem Raum 86 und dem Schacht 74 ableiten zu können, sind diese mit Abflußleitungen 90 und 91 verbunden, die ein in gemeinsames Abflußrohr münden können.

Neben der Verbindung 87 besteht eine weitere Verbindung 92 zwischen dem Raum 86 und dem Schacht 74, der von dem Schacht 74 schräg nach oben zum Raum 86 führt. Über dieses Rohr 92 kann eine Wärmeübertragung von dem Schacht 74 zu dem Raum 86 erfolgen, nämlich dann, wenn die Heizung 84 in Betrieb ist. Eine entsprechende Konstruktion hat den Vorteil, daß der Raum 86 keine gesonderte Heizung benötigt, vielmehr die Wärmeenergie des Schachtes 74 mitgenutzt werden kann.

Eine verfahrbare Vorrichtung 100 zum Verstauen des Anschlußkabels 102 einer zentralen Bordnetzversorgungsanlage enthält eine drehbare Aufwickeltrommel 103, auf die das Anschlußkabel 102 aufgewickelt wird und von der ein mehr oder weniger langes Stück abgewickelt wird, wenn das Ende des Anschlußkabels mit einem Flugzeug verbunden wird. Das Anschlußkabel 102 verläuft bis zu einem Verteiler- bzw. Anschlußkasten 104.

Vom Anschlußkasten 104 ist ein nicht dargestelltes Verbindungskabel beispielsweise längs einer Fluggastbrücke zu einem 400-Hz-Generator oder Umrichter verlegt. Das Verbindungskabel kann in Haltern aufgehängt sein, die in einer Schiene längsverschiebbar gelagert sind, um die Länge des Verbindungskabels an die ausgezogene Länge der Fluggastbrücke anpassen zu können.

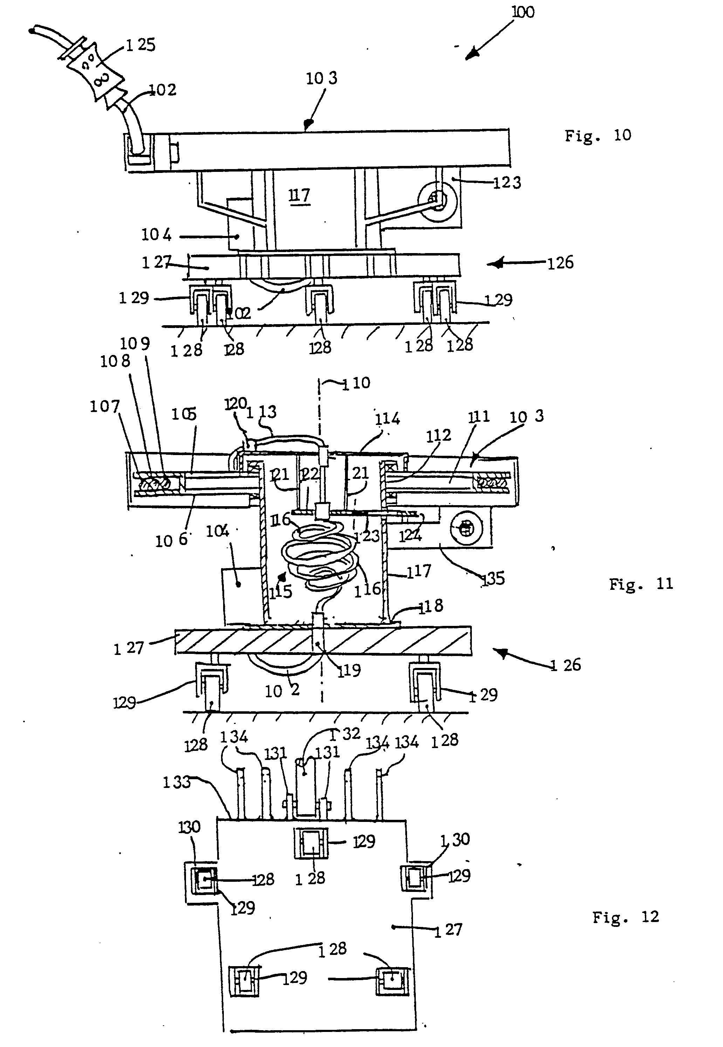

Die Aufwickeltrommel 103 enthält zwei seitliche, zueinander parallele Trommelscheiben 105, 106, zwischen denen das Anschlußkabel 102 in aufgewickeltem Zustand liegt. Der Abstand zwischen den beiden Trommelscheiben 105, 106 ist so auf den Durchmesser des Anschlußkabels 102 abgestimmt, daß sich die aufgewickelten Lagen 107, 108, 109 in einer Ebene nebeneinander befinden. Die beiden Trommelscheiben 105, 106 sind an ihren, der Drehachse 110 zugewandten Rändern durch einen nicht näher bezeichneten Ring miteinander und mit Speichen 111 verbunden. Von dem innen auf der Aufwickeltrommel 103 liegenden Ende verläuft das Anschlußkabel 102 radial in Richtung der in Fig. 11 strichpunktiert dargestellten Drehachse 110 der Aufwickeltrommel 103. Ein Stück vor den inneren Enden 112 der Speichen 111 beginnt ein Bogen 113 des Anschlußkabels 102. Mit dem Bogen 113 ist das Anschlußkabel 102 in die Drehachse 110 der Aufwickeltrommel 103 umgelenkt. Die Speichen 111 sind nahe an den inneren Enden 112 mit dem Rand eines zylindrischen Topfs 114 verbunden, der eine zentrische Öffnung für den Durchlaß des Anschlußkabels 102 aufweist. Der Topf 114 ist starr an den Speichen 111 befestigt und mit diesem um die Achse 110 drehbar.

Das Anschlußkabel 102 enthält einen Abschnitt 115, der sich in axialer Richtung der Aufwickeltrommel 103 erstreckt. Der Abschnitt 115 weist eine frei im Raum angeordnete Kabelspirale auf, die an ihren Enden jeweils in einer Öffnung der Aufwickeltrommel 103 gehalten ist. Die Kabelspirale des Abschnitts 115 besteht aus mehreren, z. B. drei bis vier Windungen 116, die im Raum zwischen den als Führungs- und Halteelemente vorgesehenen Öffnungen freiliegend angeordnet sind. Die Öffnungen sind in Richtung der Drehachse 110 angeordnet. Der Abschnitt 115 verläuft längs der Drehachse 110 der Aufwickeltrommel 103 und befindet sich in einem zylindrischen Gehäuse 117, auf dessen Außenseite die Aufwickeltrommel 103 drehbar gelagert ist. Das Gehäuse 117 ist an seiner einen Stirnseite mit einer Abdeckung 118 versehen, die eine zentrische Öffnung für den Durchlaß des Anschlußkabels 102 enthält. In die Öffnung ist eine Kabelverschraubung 119 eingesetzt, mit der das Anschlußkabel 102 gehalten wird.

Der Bogen 113 des Anschlußkabels 102 ist in einer außen am Boden des Topfs 114 angebrachten Halterung 120 geführt. Die Halterung 120 ist außermittig, d. h. in einem gewissen Abstand von der Öffnung angeordnet.

Innerhalb des nicht näher bezeichneten Kabelmantels verlaufen die Adern des Anschlußkabels 102 spiralförmig. Wenn sich ein größerer Abschnitt des Anschlußkabels 102 auf der Aufwickeltrommel 103 befindet, ist die radiale Ausdehnung der Windungen 116 der Kabelspirale am größten. Die Kabelspirale ist dann am wenigsten verdreht. Es ist möglich, daß sich beim Aufwickeln die Anzahl der Windungen 116 verkleinert. Wenn ein größerer Teil des Anschlußkabels 102 von der Aufwickeltrommel 103 abgezogen ist, sind die Windungen 116 wieder stärker miteinander verdreht. Die radiale Ausdehnung ist am kleinsten. Je nach dem Grad der Verdrehung können wieder mehr Windungen vorhanden sein. Die Länge des Abschnitts 115, die radiale Ausdehnung und die Anzahl der Windungen 116 sind auf die auf- bzw. abzuwickelnden Lagen 107, 108, 109 und deren Durchmesser abgestimmt.

Mit der Kabelspirale läßt sich bei drei Lagen 107, 108, 109 ohne weiteres eine Abwickellänge von mindestens 18 m Kabel erreichen. Durch mehr Lagen kann unter entsprechender Anpassung der Kabelspirale eine noch größere Abwickellänge erreicht werden. Die Länge des Abschnitts 115 beträgt dabei ungefähr 0,5 m.

Auf der Innenseite des Topfs 114 sind Stäbe 121 befestigt, die konzentrisch und parallel zu der Drehachse 110 verlaufen. Die Stäbe 121 erstrecken sich über ein Stück der Länge des Abschnitts 115. Auf den Enden der Stäbe 121 ist ein Antriebsrad 122 befestigt, das konzentrisch zur Drehachse 110 verläuft. Das Antriebsrad 122 hat einen Durchlaß.

Das Antriebsrad 122 ist vorzugsweise als Zahnrad ausgebildet, auf das eine Kette 123 aufgezogen ist, die durch eine Öffnung im Gehäuse 117 verläuft. Außen am Gehäuse 117 ist eine Antriebseinheit 135 befestigt, die einen nicht näher bezeichneten Getriebemotor enthält, dessen Ausgangswelle ein Ritzel 124 trägt, um das die Kette 123 gelegt ist. Der Getriebemotor läßt sich auf zwei einander entgegengesetzte Drehrichtungen umschalten. Über den Getriebemotor und die Kette 123 wird bedarfsweise ein Drehmoment auf die Aufwickeltrommel 103 ausgeübt, wenn das Anschlußkabel 102 auf- oder abgewickelt wird. Das Ein- und Ausschalten des Getriebemotors erfolgt über einen nicht näher dargestellten Schalter, der sich an einer von Hand tragbaren Einheit 125 befindet, die am Ende des Anschlußkabels 102 befestigt ist. Das Anschlußkabel 102 wird bei eingeschaltetem Getriebemotor mit der von der Drehzahl der Aufwickeltrommel 103 und von den Durchmessern der Lagen 107, 108, 109 bestimmten Geschwindigkeit auf- oder abgewickelt. Für das Auf- und Abwickeln reicht eine Person aus.

Die Abdeckung 118 ist auf einem Fahrwerk 126 befestigt. Das Fahrwerk 126 enthält eine Platte 127, auf der die Abdeckung 118 aufliegt und beispielsweise angeschraubt ist. Auf der Unterseite der Platte 127 sind fünf Räder 128 befestigt. Die Räder 128, mit denen die Vorrichtung auf dem Boden abgestellt wird, sind jeweils im Abstand der Ecken eines regelmäßigen Fünfecks voneinander angeordnet. Die Räder 128 sind je in einem U-förmigen Halter 129 drehbar gelagert. Während die Räder 128 je um horizontale Achsen drehbar sind, sind die Halter 129, die an der Platte 127 befestigt sind, je um vertikale Achsen beweglich gelagert.

Mit den fünf Rädern 128 wird die Vorrichtung 101 gegen Umkippen geschützt. Sie hat deshalb eine große Standfestigkeit. die Vorrichtung 101 kann darüberhinaus in beliebigen, parallel zur Fahrbahnoberfläche verlaufenden Richtungen bewegt werden, da sich die Räder 128 durch Schwenkbewegungen auf die Bewegungsrichtung einstellen. Um die Abmessungen der Platte 127 klein zu halten, können von dieser Träger 130 ausgehen, auf deren Unterseiten die Räder 128 drehbar gelagert sind.

Auf einer Seite 133 der beispielsweise rechteckigen Platte 127 ist in der Mitte ein Paar von plattenförmigen Haltern 131 befestigt, zwischen denen eine Deichsel 132 in einer horizontalen Ebene schwenkbar gelagert ist.

Mit der in Fig. 12 nur teilweise dargestellten Deichsel 132 kann die Vorrichtung 101 von Hand oder durch ein Kraftfahrzeug gezogen werden.

Die Seite 133 enthält weiterhin je zwei Paare von vorspringenden Streben 134, die beiderseits der Halter 131 senkrecht zur Ebene der Seite 133 verlaufen. Die Streben 134 weisen nicht näher bezeichnete Löcher nahe an ihren der Stirnseite abgewandten Enden auf. Mit den Streben 134 kann die Vorrichtung 101 an einer Stütze einer Fluggastbrücke befestigt werden. Die Stütze weist hierfür zwei plattenförmige Vorsprünge auf, die je in den Raum zwischen zwei Streben 134 ragen und an diesen mittels nicht dargestellter Bolzen befestigt sind. Die Vorrichtung 101 wird dann zusammen mit der Stütze bewegt, bei dem es sich zweckmäßigerweise um die dem Brückenkopf am nächsten liegenden Stütze handelt. Da die oben beschriebene Vorrichtung bei geringen äußeren Abmessungen eine große Kabellänge aufnehmen kann, reicht die Kabellänge auch aus, wenn die Stütze einen gewissen Abstand vom Brückenkopf hat. Die Vorrichtung 101 wird an der dem Brückenkopf zugewandten Seite der Stütze befestigt.

## Patentansprüche

1. Vorrichtung zum Verstauen von einem eine zentrale Bordnetzversorgungsanlage auf Flughäfen mit einem Versorgungssteckeranschluß eines Flugzeuges verbindbaren Versorgungskabel (5, 102), das spiralförmig in einer Ebene zwischen zwei parallelen Trommelscheiben (11, 12 ; 105, 106) einer Kabelaufwickelvorrichtung (7, 103) aufwickelbar bzw. von dieser abwickelbar ist, wobei das Versorgungskabel (5, 102) über vorzugsweise einen Abschnitt (22, 115) mit einem Festanschluß wie Anschlußkasten (66, 104) verbunden ist, dadurch gekennzeichnet, daß die Kabelaufwickelvorrichtung (7, 103) am äußeren Umfang angeordnete Führungselemente (48) aufweist, die an ihren Berührungsflächen mit den außenliegenden Flächen des Versorgungskabels (5, 102) jeweils niedrige Reibungskoeffizienten aufweisen, und daß die Führungselemente (48) ortsfest in bezug auf den Festanschluß (66, 104) angeordnet sind.

2. Vorrichtung nach Anspruch 1, dadurch gekennzeichnet, daß die Führungselemente achsparallel zu der Drehachse (17) der Kabelaufwickelvorrichtung (7) angeordnete, drehbar gelagerte Rollen (48) sind.

3. Vorrichtung nach Anspruch 2, dadurch gekennzeichnet, daß die Rollen (48) bis auf eine größere Lücke in gleichmäßigen Abständen längs des Umfangs angeordnet sind.

4. Vorrichtung nach insbesondere Anspruch 1, dadurch gekennzeichnet, daß die Kabelaufwickelvorrichtung (7) mit ihrer Drehachse (17) horizontal angeordnet ist.

5. Vorrichtung nach Anspruch 4, dadurch gekennzeichnet, daß die Kabelaufwickelvorrichtung (7) in einem Raum (74) unterflur zu einer Rollbahn (75) eines Flughafens angeordnet ist.

6. Vorrichtung nach Anspruch 5, dadurch gekennzeichnet, daß das freie Ende des Versorgungskabels (5) in einer Halterung (82) festgelegt ist, die vorzugsweise mit einem anhebbaren eine Abdeckung (76) oder einen Abschnitt dieser bildenden Element (78) der Kabelaufwickelvorrichtung (7) verbunden ist.

7. Vorrichtung nach Anspruch 6, dadurch gekennzeichnet, daß das Element (78) ein Deckel ist, der innenseitig eine Sichtanzeige (80) wie Blink- oder Dauerlicht aufweist, die bei geöffnetem Deckel aktivierbar ist.

8. Vorrichtung nach Anspruch 6, dadurch gekennzeichnet, daß die Abdeckung (76) einen die Kabelaufwickelvorrichtung (7) aufnehmenden Schacht (74) bündig zur angrenzenden Oberfläche wie Rollfeld (75) verschließt, daß in dem Schacht eine Heizung (84) angeordnet ist und daß vorzugsweise im Bodenbereich des Schachtes ein Flüssigkeitsfühler (85) zum gegebenenfalls Aktivieren einer Flüssigkeitsförderpumpe vorgesehen ist.

9. Vorrichtung nach Anspruch 6, dadurch gekennzeichnet, daß das Element zumindest teilweise einen im Bereich des Rollfeldes eingelassene die Halterung (82) aufnehmenden Raum bündig zur angrenzenden Oberfläche verschließt, wobei der Raum neben dem Schacht (74) angeordnet ist und zu diesem eine Verbindung aufweist, durch die das Versorgungskabel (5) ziehbar ist.

10. Vorrichtung nach Anspruch 1, dadurch gekennzeichnet, daß die nach außen gerichteten Seiten der Trommelscheiben (11, 12) von einer zylindrischen Abdeckung umgeben sind, die an Trägern befestigt ist und eine Unterbrechung an der Austrittsstelle des Versorgungskabels (5) aufweist, das durch ein vor der Austrittsstelle liegendes Rollenmundstück geführt ist.

11. Vorrichtung nach Anspruch 10, dadurch gekennzeichnet, daß die Rollen (48) in Ausnehmungen der Abdeckung angeordnet sind.

12. Vorrichtung nach Anspruch 1, dadurch gekennzeichnet, daß ein innen auf der Kabelaufwickelvorrichtung (7) angeordnetes Ende des Versorgungskabels (5) über Klemmen lösbar mit einem in die Drehachse (17) der Kabelaufwickelvorrichtung (7) umgelenkten Kabelstück (65) verbunden ist, das in einem in Achsrichtung der Kabelaufwickelvorrichtung (7) sich erstreckenden Abschnitt (22) freiliegend spiralförmig angeordnet ist und das an seinem anderen Ende über Klemmen lösbar mit einem zur zentralen Bordnetzversorgungsanlage verlaufenden Versorgungskabelstück (9) verbunden ist.

13. Vorrichtung nach Anspruch 12, dadurch gekennzeichnet, daß das Kabelstück (65) in zwei Kabeleinspannelementen (63, 64) befestigt ist, die je in der einen Abdeckung (25) und in einer Wand eines mit dem Antriebsrad (33) verbundenen Abschlußkastens (51) angeordnet sind.

14. Vorrichtung (100) nach Anspruch 1, dadurch gekennzeichnet, daß die Kabelaufwickelvorrichtung (103) drehbar auf einem auf einem Boden fahrbaren Fahrwerk (120) angeordnet ist.

15. Vorrichtung nach Anspruch 14, dadurch gekennzeichnet, daß ein die drehbare Kabelaufwickelvorrichtung (103) tragendes zylindrisches Gehäuse (117), in dem sich ein in Achsrichtung der Kabelaufwickelvorrichtung (103) freiliegender Abschnitt (115) des Anschlußkabels (102) befindet, an seiner der Aufwickeltrommel (103) abgewandten Stirnseite mit einer Platte (127) verbunden ist, an der Räder (128) drehbar befestigt sind.

16. Vorrichtung nach Anspruch 15, dadurch gekennzeichnet, daß mit der Platte (127) fünf in gleichmäßigen Abständen voneinander längs einer Kreisbahn angeordnete Räder (128) verbunden sind, die je um eine Achse senkrecht zur Drehachse bewegbar gelagert sind.

17. Vorrichtung nach Anspruch 16, dadurch gekennzeichnet, daß wenigstens zwei Räder (128) auf der Unterseite von Trägern (130) angeordnet sind, die von der Platte (127) nach außen ragen.

18. Vorrichtung nach Anspruch 15, dadurch gekennzeichnet, daß an der Platte (127) eine Deichsel (132) angelenkt ist.

19. Vorrichtung nach Anspruch 15, dadurch gekennzeichnet, daß an einer Stirnseite (133) der Platte (127) vorspringende Streben (134) mit Löchern zur Befestigung an einer Stütze einer Fluggastbrücke vorgesehen sind.

## Claims

1. Device for stowing an electrical supply cable (5, 102) able to be connected from a central electrical power supply system at an airport to the external power socket of an aircraft, said cable being capable of being wound in coil form in one plane between two parallel drum discs (11, 12; 105, 106) on a cable winding device (7, 103) and of being unwound from the same, whereby the supply cable (5, 102) is linked preferably via a section (22, 115) to a fixed connection point such as terminal box (66, 104), characterized in that, the cable winding device (7, 103) has guidance elements (48) arranged around its external circumference, said elements each having low coefficients of friction on faces making contact with the outwards-facing surfaces of the supply cable (5, 102), and that said guidance elements (48) are arranged in fixed positions relative to the fixed connector (66, 104).

2. Device according to Claim 1 characterized in that, the guidance elements are arranged with their axes parallel to the axis of rotation (17) of the cable winding device (7) and take the form of freely rotatable rollers (48).

3. Device according to Claim 2, characterized in that, the rollers (48) are, with the exception of one large gap, longitudinally mounted at regular intervals around the circumference.

4. Device especially according to Claim 1, characterized in that, the cable winding device (7) is arranged with its axis or rotation (17) in the horizontal plane.

5. Device according to Claim 4, characterized in that, the cable winding device (7) is arranged in a space (74) below the surface of an apron (75) at an airport.

6. Device according to Claim 5, characterized in that, the free end of the supply cable (5) is fixed in a holder (82) preferably connected to a liftable cover (76) or a section of the cable winding device (7) forming such an element (78).

7. Device according to Claim 6, characterized in that, element (78) is a cover the inside of which is equipped with a visual indicator (80) such as a flashing or steady light capable of activation when said cover is open.

8. Device according to Claim 6, characterized in that, the cover (76) of the vertical shaft containing a cable winding device (7) closes flush with the surrounding surface such as the apron (75), and that a heating system (84) is arranged in said shaft, and that preferably a liquid detector (85) is provided at the foot of the shaft to activate a liquid transporting pump as and when necessary.

9. Device according to Claim 6, characterized in that, the element at least partially closes flush with the surrounding surface, a space let into the area of the apron to house the holder (82), whereby said space is arranged adjacent to the shaft (74) and adjoined to it by a passage through which the supply cable (5) can be drawn.

10. Device according to Claim 1, characterized in that, the outwards facing sides of the drum discs (11, 12) are enclosed by a cylindrical cover, said cover being secured to supports and having an opening at the outlet point for the supply cable (5), which is guided by a roller-equipped outlet arrangement positioned ahead of the outlet point.

11. Device according to Claim 10, characterized in that, the rollers (48) are arranged in recesses in the cover.

12. Device according to Claim 1, characterized in that, one end of the supply cable (5) arranged on the inside of the cable winding device (7) is linked via disconnectable terminals with a section of cable (65) deflected in the rotational axis (17) of the cable winding device (7), said cable being arranged in a section extending in the axial direction of the cable winding device (7) in an open coil form, and that its other end is linked via disconnectable terminals with a section of supply cable (9) running to the aircraft electrical power supply system.

13. Device according to Claim 12, characterized in that, the section of cable (65) is held in two cable tensioning elements (63, 64) one being arranged in the cover (25) and one in the wall of a terminal box (51) linked with the drive wheel (73).

14. Device (100) according to Claim 1, characterized in that, the cable winding device (103) is rotatively mounted on a wheeled carriage (120) capable of movement over the ground.

15. Device according to Claim 14, characterized in that, a cylindrical housing (117) carrying the rotatable cable winding device (103), said housing containing an open coil section (115) of the connection cable (102) in the rotational axis of the cable winding device (103), said housing being connected on its side facing the winding drum (103) with a plate (127) to which are attached castoring wheels (128).

16. Device according to Claim 15, characterized in that, the plate (127) carries five wheels (128) arranged at uniform intervals around a circular path, said wheels each being free to pivot about an axis perpendicular to the axis of their rotation.

17. Device according to Claim 16, characterized in that, at least two of the wheels (128) are arranged on the underside of the outriggers (130) projecting from the plate (127).

18. Device according to Claim 15, characterized in that, a towbar (132) is hinged to the plate (127).

19. Device according to Claim 15, characterized in that, beams (137) projecting forwards from one face (133) of plate (127) are provided with holes for securing to a connection point on a telescopic boarding gangway for passengers.

## Revendications

1. Dispositif de logement d'un câble d'alimentation (5, 102) reliant une installation centrale d'alimentation de réseau de bord sur aéroport à la prise d'alimentation d'un avion, ce câble pouvant être enroulé ou déroulé en spirale sur un plan entre les deux flasques parallèles (11, 12 ; 105, 106) d'un enrouleur (7, 103), ce câble d'alimentation (5, 102) étant également relié par un tronçon (22, 115) de préférence à un raccordement fixe, tel qu'une boîte de connexion (66, 104), caractérisé par le fait que l'enrouleur (7, 103) comporte des éléments de guidage (48) disposés sur sa périphérie extérieure, qui, à leurs surfaces de contact avec les surfaces extérieures du câble d'alimentation (5, 102), ont de bas coefficients de friction, et que les éléments de guidage (48) sont disposés de manière stationnaire par rapport au raccordement fixe (66, 104).

2. Dispositif selon revendication 1, caractérisé par le fait que les éléments de guidage agencés parallèlement à l'axe de rotation (17) de l'enrouleur (7) sont des rouleaux (48) rotatifs.

3. Dispositif selon revendication 2, caractérisé par le fait que les rouleaux (48) sont disposés à intervalles réguliers ne dépassant pas une certaine longueur, sur toute la périphérie de l'enrouleur.

4. Dispositif selon revendication 1 particulièrement, caractérisé par le fait que l'enrouleur (7) est disposé avec axe de rotation horizontal (17).

5. Dispositif selon revendication 4, caractérisé par le fait que l'enrouleur (7) est disposé dans un espace (74) souterrain sous piste de roulement (75) d'un aéroport.

6. Dispositif selon revendication 5, caractérisé par le fait que l'extrémité libre du câble d'alimentation (5) est maintenue dans une fixation (82) qui est de préférence reliée à un élément (78) de l'enrouleur formant couvercle soulevable ou une partie de celui-ci.

7. Dispositif selon revendication 6, caractérisé par le fait que l'élément (78) est un couvercle qui comporte à l'intérieur une signalisation (80) telle que feu clignotant ou feu fixe, mise en marche par l'ouverture du couvercle.

8. Dispositif selon revendication 6, caractérisé par le fait que le couvercle (76) recouvre une cuve (74) abritant l'enrouleur (7), la cuve étant à fleur de la surface adjacente de la piste (75), qu'un chauffage est prévu dans la cuve, et que dans le fond de la cuve un détecteur de liquide (85) est prévu pour déclencher éventuellement une pompe.

9. Dispositif selon revendication 6, caractérisé par le fait que l'élément recouvre au moins partiellement un espace à fleur de la surface adjacente, cet espace abritant la fixation (8) au niveau de la piste et étant disposé près de la cuve (74) et comportant une liaison avec celle-ci par laquelle il est possible de tirer le câble (5).

10. Dispositif selon revendication 1, caractérisé par le fait que les faces tournées vers l'extérieur des flasques de tambour (11, 12) sont entourées d'une couverture cylindrique fixée sur des supports et comportant une interruption à la sortie du câble (5) guidé par une embouchure à rouleaux située devant la sortie du câble.

11. Dispositif selon revendication 10, caractérisé par le fait que les rouleaux (48) sont disposés dans des cavités de la couverture.

12. Dispositif selon revendication 1, caractérisé par le fait qu'une extrémité du câble (5) disposée à l'intérieur sur l'enrouleur (7) est reliée de manière démontable par bornes à un tronçon de câble (65) renvoyé dans l'axe (17) de l'enrouleur (7) et disposé en spirale dans une section (22) s'étendant dans la direction de l'axe de l'enrouleur (7) et l'autre extrémité est reliée de manière démontable par bornes à un tronçon de câble d'alimentation (9) en direction de l'installation centrale d'alimentation de réseau de bord.

13. Dispositif selon revendication 12, caractérisé par le fait que le tronçon de câble (65) est fixé dans deux éléments de fixation (63, 64) qui sont disposés chacun dans le couvercle (25) et dans une paroi d'une boîte de raccordement (51) reliée à la roue d'entraînement (33).

14. Dispositif (100) selon revendication 1, caractérisé par le fait que l'enrouleur (103) est monté de manière orientable sur un châssis (120) mobile sur le sol.

15. Dispositif selon revendication 14, caractérisé par le fait qu'un corps cylindrique (117) portant l'enrouleur (103) orientable, lequel corps abritant un tronçon (115) du câble de raccordement (102) disposé librement dans le sens de l'axe de l'enrouleur (103), est relié sur sa face orientée vers le tambour enrouleur (103), à une plaque (127) sur laquelle sont fixées des roues (128) orientables.

16. Dispositif selon revendication 15, caractérisé par le fait que cinq roues (128) disposées à intervalles réguliers l'une de l'autre sur une trajectoire circulaire sont fixées à la plaque (127) et sont supportées chacune par un axe perpendiculaire à l'axe de rotation.

17. Dispositif selon revendication 16, caractérisé par le fait qu'au moins deux roues (128) sont disposées sur la face inférieure de poutres (130) qui dépassent de la plaque (127) vers l'extérieur.

18. Dispositif selon revendication 15, caractérisé par le fait qu'un timon (132) est articulé sur la plaque (127).

19. Dispositif selon revendication 15, caractérisé par le fait que sur la face avant (133) de la plaque (127), des entretoises (124) saillantes sont prévues avec des trous pour fixation à un support de passerelle.

Fig.1

Fig.2

EP 0 252 914 B1

Fig. 3

Fig. 4

Fig. 5

2

EP 0 252 914 B1

Fig. 6

Fig. 7

3

Fig. 9

Fig. 10

Fig. 11

Fig. 12

6